# EUROPEAN PATENT SPECIFICATION

(11) **EP 3 061 007 B1**
(45) Date of publication and mention of the grant of the patent: **28.02.2018**
(21) Application number: 14806721.8
(22) Date of filing: 21.10.2014
(51) Int. Cl.: G06F 17/30

(54) **METHOD FOR THE GENERATION OF AN IT ONTOLOGY, COMPUTER PROGRAM PRODUCT CONFIGURED TO IMPLEMENT THE OPERATIONS OF SAID METHOD AND IT EQUIPMENT CONFIGURED TO EXECUTE SAID COMPUTER PROGRAM PRODUCT.**
VERFAHREN ZUR ERZEUGUNG EINER IT-ONTOLOGIE, COMPUTERPROGRAMMPRODUKT ZUR DURCHFÜHRUNG DES OPERATIONEN DIESES VERFAHRENS UND IT-AUSRÜSTUNG ZUR AUSFÜHRUNG DIESES COMPUTERPROGRAMMPRODUKTS
PROCÉDÉ DE GÉNÉRATION D'ONTOLOGIE, PRODUIT PROGRAMME D'ORDINATEUR CONFIGURÉ POUR EXÉCUTER LES ÉTAPES DUDIT PROCÉDÉ, ET ÉQUIPEMENT INFORMATIQUE CONFIGURÉ POUR EXÉCUTER LEDIT PRODUIT PROGRAMME D'ORDINATEUR

(30) Priority: 22.10.2013 IT VI20130258
(43) Date of publication of application: 31.08.2016
(73) Proprietor: 2c Solution S.r.l., 35011 Campodarsego (PD) (IT)
(72) Inventor: COLETTO, Davide, I-35011 Campodarsego (PD) (IT); PIAZZA, Mirko, I-36040 Grisignano Di Zocco (VI) (IT)
(74) Representative: Marchioro, Paolo
(86) International application number: PCT/IB2014/065507
(87) International publication number: WO 2015/059637

(56) References cited:
- HAI-TAO ZHENG ET AL: "A Concept-Driven Automatic Ontology Generation Approach for Conceptualization of Document Corpora", WEB INTELLIGENCE AND INTELLIGENT AGENT TECHNOLOGY, 2008 IEEE/WIC/ACM INTERNATIONAL CONFERENCE ON, IEEE, PISCATAWAY, NJ, USA, 9 December 2008 (2008-12-09), pages 352-358, XP058017234, DOI: 10.1109/WIIAT.2008.233 ISBN: 978-0-7695-3496-1
- LIU D R ET AL: "Document recommendation for knowledge sharing in personal folder environments", JOURNAL OF SYSTEMS & SOFTWARE, ELSEVIER NORTH HOLLAND, NEW YORK, NY, US, vol. 81, no. 8, August 2008 (2008-08), pages 1377-1388, XP022757384, ISSN: 0164-1212, DOI: 10.1016/J.JSS.2007.10.027 [retrieved on 2007-11-17]
- SHUN-HONG SIE ET AL: "Automatic Ontology Generation Using Schema Information", PROCEEDINGS OF THE IEEE/WIC/ACM INTERNATIONAL CONFERENCE ON WEB INTELLIGENCE IEEE COMPUT, IEEE, SOC LOS ALAMITOS, CA, USA, December 2006 (2006-12), pages 526-531, XP031008660, ISBN: 978-0-7695-2747-5

## Description

The invention concerns an improved method for the generation of an IT ontology through the analysis of a plurality of digital documents with alphanumeric content stored in one or more storage media.

The invention concerns also a computer program product configured to implement the operations of said method of the invention when said product is being executed in an electronic processing device.

Finally, the invention also concerns an IT apparatus comprising an electronic processing device configured to execute said computer program product and thus implement the operations of said method of the invention.

It is known that in the field of information technology the term "ontology" means a structured vocabulary representing a set of metadata related to one another and relating to a specific domain of application.

The use of an ontology, therefore, allows a user or an IT application to obtain the desired information through the formulation of high-level "queries" that are promptly translated, by means of special logic processes, into low-level interrogations of the database or databases in which said information is contained.

For example, said ontologies may be used to automatically recognize the alphanumeric content of a digital document in order to be able to categorize it by subject area. In this way, it is possible to convey said analysed document to a memory allocation or to a precise user belonging to the same subject area.

However, it is also known that, to disadvantage, the operations necessary to create said ontologies are rather complex and need a considerable effort in terms of resources and time.

In particular, to disadvantage, at present a reliable ontology that allows precise results to be obtained still needs a determinant and not negligible human contribution.

In particular, the generation of an ontology requires a considerable contribution by skilled personnel that have to dedicate their intellectual skills and their time to the definition and to the association of the terms that will define said structured vocabulary. Therefore, the economic cost for the definition of an ontology is rather high.

In "A Concept-Driven Automatotic Ontology Generation Approach for Conceptualization of Document Corpora", IEEE Conference on Web Intelligence and Intelligent Agent Technology, December 2008, Hai-Tao Zheng *et al* disclosed a method for automatically deriving an ontology from the content of documents, independently of the storage organization of the documents. The present invention intends to overcome the drawbacks mentioned above.

In particular, it is one of the objects of the present invention to define a method that makes it possible to automatically generate an ontology starting from digital documents with alphanumeric content stored in one or more storage media.

Therefore, it is an object of the present invention to define an automatic method for analysing said digital documents for the creation of an ontology that eliminates the need for human contributions.

Consequently, it is an object of the invention to define a method that makes it possible to reduce the time and resources necessary for the creation of said ontology.

It is another, yet not the least object of the invention to define a method for the generation of an ontology that makes it possible to categorize a specific document in a more precise manner compared to the ontologies generated with the known methods.

The objects mentioned above are achieved by the method for the creation of an ontology carried out according to the main claim.

In particular, the method of the invention for the automatic creation of an ontology is characterized in that it associates the information obtained from the path of each digital document with the information obtained from the analysis of the content of the same document. This association advantageously makes it possible to define keywords (in technical jargon also called "tags") that are considered to be of first level and that correspond to the names of the virtual folders obtained from the paths of each digital document, associated with keywords ("tags") of second level that in turn correspond to portions of the content of said digital document. In particular, said first-level keywords will be used as macro-categories for the categorization of new digital documents by means of said ontology, while the second-level keywords will be used as sub-categories in the same categorization.

Further characteristics of the method of the invention are described in the dependent claims.

The invention also includes the computer program product configured to implement the operations of said method of the invention and the IT equipment comprising an electronic processing device configured to execute said computer program product, whose characteristics are respectively described in claims 11 and 12.

Said objects, together with the advantages that will be highlighted below, are illustrated in greater detail in the description of a preferred embodiment of the invention that is provided by way of non-limiting example with reference to the attached drawings, wherein:

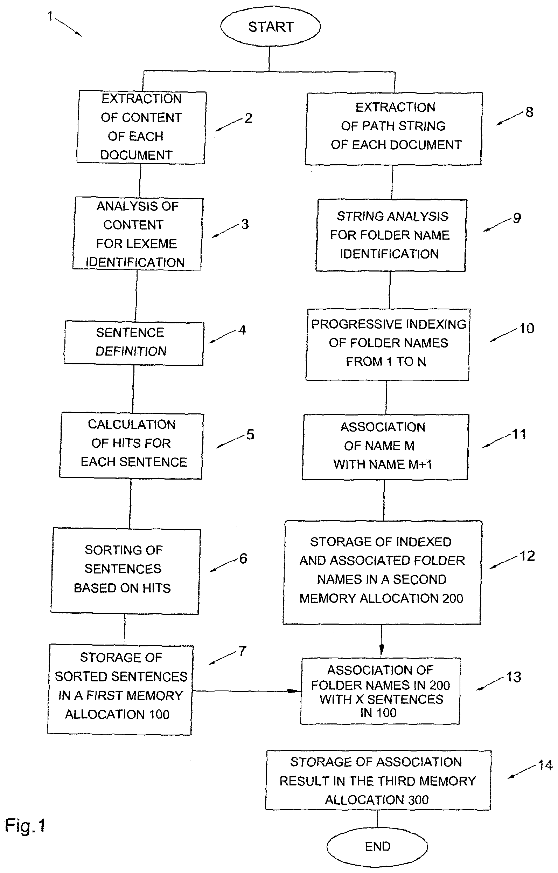

- Figure 1 shows the block diagram of the method of the invention for automatically generating an IT ontology.

The method that is the subject of the invention for the generation of an IT ontology through the analysis of a plurality of digital documents with alphanumeric content is represented as a whole with the block diagram shown in Figure 1, where it is indicated by **1.**

Said digital documents are stored in one or more storage media, like for example hard disks integrated in a processing device configured to implement the method **1** of the invention, or alternatively external hard disks connected to said electronic processing device, wherein said disks can be located both locally and remotely ("cloud").

In addition or as an alternative to the above, said digital documents may be stored in different types of storage media of the portable type temporarily connected to said electronic processing device, like for example the known USB sticks.

Regarding the type of digital documents to be analysed, these can be digital text documents, so the alphanumeric content can be managed directly through the method **1** of the invention. Alternatively, said documents may be in digital image format, so that before being able to analyse their alphanumeric content it is necessary to perform an intermediate operation, which usually includes the application of an algorithm of the OCR type.

As can be observed in Figure 1, the method **1** of the invention includes, for each one of the digital documents stored in said storage media, the operation **2** of extraction of their alphanumeric content and the operation **3** of analysis of the latter in such a way as to identify each one of its lexemes.

In this description, the term "lexeme" means each set of indivisible characters.

Concerning, in particular, said operation **3** of analysis of the alphanumeric content, in the field of information technology this is known as "tokenization". In greater detail, this operation includes the definition and identification, within said alphanumeric content, of one or more separation elements that distinguish a specific lexeme from the adjacent one. According to the preferred embodiment of the invention described herein, said separation elements are the empty spaces between characters and the punctuation marks. It cannot be excluded, however, that in different embodiments of the method **1** of the invention different separation elements may be selected, provided that they make it possible to distinguish a lexeme from the adjacent ones.

Once each individual lexeme has been identified inside the specific digital document, according to the method **1** that is the subject of the invention each one of said lexemes is concatenated with one or more lexemes adjacent to it, in such a way as to define a plurality of sentences. Said operation is indicated by **4** in Figure 1.

According to the method **1** of the invention, the minimum number and the maximum number of lexemes that can constitute such sentences are defined in advance. According to the preferred embodiment of the invention, it has been established that said minimum number of lexemes is two and that said maximum number of lexemes is five. Obviously, in different embodiments of the method **1** of the invention both the minimum number and the maximum number of lexemes can be initialized with values different from those adopted in the preferred embodiment of the invention described herein.

Furthermore, according to said preferred embodiment of the invention, those sentences that have, at the beginning or at the end, one or more terms defined in advance as inadmissible are excluded from the sentences defined through the above mentioned operation of concatenation. An example of inadmissible terms may be represented by the group of definite and indefinite articles made up by the lexemes "the", "a" and "an".

Alternative variant embodiments of the method **1** of the invention may not provide for said exclusion, or they may provide for the exclusion of those sentences that contain terms that are considered inadmissible.

According to the method **1** of the invention, once the operation **4** of definition of the sentences has been completed, including the exclusion step, the number of hits for each one of said sentences within the specific digital document is calculated. Said operation is indicated by **5** in Figure 1.

In other words, the method calculates how many times the same sentence is repeated within the digital document being analysed.

Said calculation of the hits of the sentences makes it possible to carry out the successive operation of sorting the same sentences, indicated by **6** in Figure 1. In fact, according to the method **1** of the invention, the sentences are sorted in decreasing order based on the number of hits.

In particular, preferably but not necessarily, according to the preferred embodiment of the invention a sorting index *i* is calculated for each sentence and corresponds, in fact, to the number of hits for each sentence divided by the total number of lexemes present in the digital document and multiplied by the number of lexemes that make up the sentence in question. Therefore, in this case the sentences are sorted in decreasing order based on said sorting index *i*.

The result of said sorting operation is stored in a first memory allocation **100** in one of said storage media. Said storage operation is indicated by **7** in Figure 1. According to the invention, the method **1** for the generation of an IT ontology further includes the operation **8** of extraction of the string related to the path of the digital document. This string is successively analysed, and this operation is indicated by **9** in Figure 1, in such a way as to identify the identification name of each individual virtual folder of said path. For the sake of clarity, from this point of the description onwards the term "folder" or "folders" alone will be used to refer to virtual folders.

Preferably but not necessarily, according to the preferred embodiment of the method **1** of the invention, said operation of analysis of said string considers the signs "/" or "\" (also respectively known as "slash" and "backslash") as separation elements between each one of the folder names and the adjacent ones. Obviously, it cannot be excluded that in different embodiments of the method **1** of the invention the selected separation element may be different from those indicated above with reference to the first embodiment of the invention.

Usually the selection of said separation elements depends on the operating system and on the "file system" present in the information equipment in which the method **1** of the invention is implemented and in which said digital documents are stored.

According to the method **1** of the invention, once said operation **9** of identification of the folder names present in the path of said digital document being analysed, each one of said folder names is indexed. Said operation is indicated by **10** in Figure 1.

In particular, according to the method **1** of the invention, the operation **10** includes first of all the selection of the folder name from which said indexing operation has to start. Preferably but not necessarily, the selection of the folder name for the start of said indexing operation should begin from the name of the most external leaf folder, meaning the folder to which the considered digital document is actually allocated, going hierarchically back along the path by an ***n*** number of folder names defined in advance. For example, if the path of a specific digital document comprises a hierarchical structure consisting of 10 folder names and said selected number *n* is 2, the eighth folder name of said path (10-2 = 8) is selected as starting folder name for the indexing operation. At this point the indexing operation **10** requires the indexing of said starting folder name and of the names related to said subfolders with an increasing value from *1* to *n,* beginning from said starting folder name and proceeding towards the related subfolders according to the hierarchical order of said path. As explained above, if said selected value *n* is two, the starting folder name is indexed with value 1, while the subfolder adjacent to the starting folder is indexed with value 2.

Obviously, *n* can be assigned an integer numeric value higher than 2. In this case, more subfolders will be indexed compared to those indexed according to the example proposed above.

According to the method **1** of the invention, once the indexing operation 10 has been completed, each one of the folder names with value *m* is associated, through the operation indicated by **11** in Figure 1, with the corresponding folder name with value *m+1,* where the value *m* is included between *1* and *n-1* (*1<= m <= n-1*).

The method **1** of the invention, in particular, begins from the folder name with value *1,* corresponding to the above mentioned starting folder name, and associate it with the folder name with value *2,* and then to consider, in turn, the folder name with value *2* to be associated with the successive folder name, and so on, progressively increasing *m* by one unit until obtaining *m=n-1.*

According to the method **1** on the invention, once said operation of association **11** has been completed, the operation **12** is carried out, which is an operation of storage of the results of said indexing and association operations into a second memory allocation **200,** shared among all said analysed digital documents.

In this way, by progressively analysing the various digital documents it is possible to define one or more synonyms constituted by the folder names with value *m+1* for each one of said folder names with value *m,* wherein said names with value *m+1* are associated, through the preceding operation of association **11,** with the above mentioned folder name with value m. Once again, the value *m* is intended to be included between *1* and *n-1* (*1<= m <= n-1*).

In other words, a hierarchical structure is obtained, according to which a set of names relating to subfolders with value *m+1* is defined for each folder name with value *m,* said subfolders names being considered synonyms for one another at the moment when the ontology generated in this way is used for the categorization of the new digital documents.

Finally, the method **1** of the invention includes the further operation **13** of association of the folder names stored in said second memory allocation **200,** including the related synonyms and indexing values, with a pre-defined number *x* of said sorted sentences, in turn stored in the first memory allocation 100.

In particular, this operation of association **13** starts from the first sentence of said list of sorted sentences that corresponds, according to the preferred embodiment of the invention, to the sentence with the highest sorting index *i* among all the sentences present in the digital document being analysed. Successively, the sentences present in said list are considered, in an orderly and progressive manner, until reaching the *x^{th}* sentence.

According to the preferred embodiment of the method **1** of the invention, the number of sentences *x* is selected based on the total number of lexemes contained in the digital document being analysed. In particular, preferably but not necessarily, the number of sentences *x* corresponds to 15 sentences when the total number of lexemes contained in the document is higher than 1000, or said number of sentences *x* corresponds to 10 sentences when said total number of lexemes is included between 1000 and 101. Finally, if the document contains a number of lexemes equal to or smaller than 100, the number of sentences *x* selected is 5.

Concerning, furthermore, said operation of association **13,** the folder names that are associated with each sentence correspond to the folder names that can be actually found in the path of the digital document being analysed.

At the end of said operation **13** the desired ontology is advantageously obtained through an automatic procedure, thus achieving the objects of the invention. This ontology can then be used for the categorization of the new digital documents uploaded in the IT equipment in question.

In particular, in order to be able to place said ontology at the disposal of IT applications or various users, the result of said operation of association **13** is stored in a third memory allocation **300,** accessible to the general public or through login credentials. This operation is indicated by **14** in Figure 1.

The invention includes also the computer program product comprising a software code portion directly uploadable in the memory of an electronic processing device and configured to implement the operations of said method **1** of the invention when said software code portion is executed in said electronic processing device.

Furthermore, the invention includes also the IT equipment comprising an electronic processing device provided with one or more storage media in which one or more of said digital documents are stored. According to the invention, also said software code portion of the computer program product of the invention is stored in said storage media.

The electronic processing device furthermore comprises a processor configured to execute said software code portion in such a way as to implement the operations of the method **1** of the invention.

According to the explanation provided above, therefore, the method **1,** the computer program product and the IT equipment of the invention achieve all the set objects.

In particular, the invention achieves the object to define a method that makes it possible to automatically generate an ontology starting from digital documents with alphanumeric content stored in one or more storage media.

Therefore, the invention also achieves the object to define an automatic method for analysing said digital documents in order to create an ontology that eliminates the need for human contributions.

A further object achieved by the invention, consequently, is the object to define a method that makes it possible to reduce the time and the resources necessary for the creation of said ontology.

Finally, the invention also achieves the object to define a method for the generation of an ontology that makes it possible to categorize a specific document in a more precise manner compared to the ontologies generated with the known methods.

## Claims

1. Computer-implemented method (1) for the generation of an IT ontology through the analysis of a plurality of digital documents with alphanumeric content stored in one or more storage media, said method (1) including the performance of the following operations for each one of said documents:
- extracting said alphanumeric content of said digital document and analysing said content in such a way as to identify each one of its lexemes;
- concatenating each one of said lexemes with one or more adjacent lexemes, in such a way as to define a plurality of sentences, the minimum and maximum number of lexemes that can be contained in each sentence being defined in advance;
- calculating the number of hits for each one of said sentences in said digital document;
- sorting said sentences in a decreasing order according to said calculated hits and storing said sorted sentences in a first memory allocation (100);
**characterized in that** it includes the performance of the following further operations for each one of said documents:
- extracting the string related to the path of said digital document, said path identifying a location where said digital document is stored on the one or more storage media, and analysing said string in such a way as to identify the identification name of each single folder of said path;
- selecting, among said identified folder names, a starting folder name from which it is possible to proceed with the next indexing operation;
- indexing said folder names, beginning from said starting folder name and continuing towards the corresponding subfolders according to the hierarchical order of said path, with an integer numeric value increasing from 1 to *n*;
- associating each one of said folder names with value *m* with the related folder name with value *m+1,* wherein *1<= m <= n-1* and wherein *m* is progressively increased by one unit;
- storing the results of said indexing and association operations in a second memory allocation (200) shared by all of said analysed digital documents, in such a way as to progressively define, for each one of said folder names with value *m,* one or more synonyms constituted by the folder names with value *m+1* associated, through the previous operation, with said folder name with value *m,* wherein *1<= m <= n-1*;
- associating said folder names stored in said second memory allocation (200), including the corresponding synonyms and the indexing values, with a pre-defined number *x* of said sorted sentences, starting from the first one of said sentences and continuing in an orderly and progressive manner, wherein said associated folder names correspond to the folder names present in said path of said digital document;
- storing the result of said operations of association in a third memory allocation (300).

2. Method (1) according to claim 1, **characterized in that,** among said plurality of sentences defined during said operation of concatenation, those sentences that have, at the beginning or at the end, one or more terms defined in advance as inadmissible are excluded.

3. Method (1) according to any of the preceding claims, **characterized in that** said operation of sorting said sentences includes the calculation, for each one of said sentences, of a sorting index *i* corresponding to the number of hits of said sentence in said digital document, divided by the total number of lexemes of said document and multiplied by the number of lexemes that make up said sentence, said sentences being sorted in a decreasing order based on said sorting index *i*.

4. Method (1) according to any of the preceding claims, **characterized in that** said minimum number of lexemes that each sentence may contain is two and said maximum number of lexemes that each sentence may contain is five.

5. Method (1) according to any of the preceding claims, **characterized in that** said pre-defined number *n* is equal to two.

6. Method (1) according to any of the preceding claims, **characterized in that** said number of sentences *x* is selected based on the total number of lexemes contained in said digital document.

7. Method (1) according to claim 6, **characterized in that** said number of sentences *x* corresponds to 15 sentences when said total number of lexemes is higher than 1000, or said number of sentences *x* corresponds to 10 sentences when said total number of lexemes is included between 1000 and 101, or said number of sentences *x* corresponds to 5 sentences when said total number of lexemes is equal to or smaller than 100.

8. Method (1) according to any of the preceding claims, **characterized in that** according to said operation of analysis of said content of said digital document, suited to identify each individual lexeme, the empty spaces and the punctuation marks are considered as separation elements between each one of said lexemes and the adjacent ones.

9. Method (1) according to any of the preceding claims, **characterized in that** according to said operation of analysis of said string related to said path, suited to identify the identification name of each individual folder, the symbols "/" or "\" are considered as separation elements between each one of said folder names and the adjacent ones.

10. Method according to any of the preceding claims, **characterized in that** according to said operation of selection of said starting folder name, said starting folder name is selected beginning with the folder name corresponding to the outer leaf folder of said path and going hierarchically back along said path of a number of folder names equal to said pre-defined number *n.*

11. Computer program product comprising a software code portion stored in the memory of an electronic processing device to implement the operations of the method according to any of the claims from 1 to 10 when said software code portion is executed in said electronic processing device.

12. IT equipment comprising at least one electronic processing device, provided with:
- one or more storage media, in which one or more digital documents are stored and in which the software code portion of the computer program product according to claim 11 is loaded;
- a processor configured so as to execute said software code portion in such a way as to implement the operations of the method according to any of the claims from 1 to 10.

## Patentansprüche

1. Computerimplementiertes Verfahren (1) zur Generierung einer IT-Ontologie durch Analyse einer Vielzahl digitaler, in einem oder mehreren Speichermedien gespeicherter Dokumente alphanumerischen Inhalts, wobei das besagte Verfahren (1) für jedes der besagten Dokumente die Ausführung der nachstehenden Vorgänge umfasst:
- Extrahierung des besagten alphanumerischen Inhalts des besagten digitalen Dokuments und Analyse des besagten Inhalts derart, dass jedes seiner Lexeme identifiziert wird;
- Verkettung jedes der besagten Lexeme mit einem oder mehreren benachbarten Lexemen, so dass eine Vielzahl von Sätzen definiert wird, wobei die Mindest- und die Höchstanzahl der Lexeme, die in jedem Satz enthalten sein können, im Voraus definiert werden;
- Berechnung der Anzahl der Hits für jeden der besagten Sätze in dem besagten digitalen Dokument;
- Sortierung der besagten Sätze in abnehmender Reihenfolge nach den besagten berechneten Hits und Speicherung der besagten sortierten Sätze in einem ersten Speicherplatz (100);
**dadurch gekennzeichnet, dass** es für jedes der besagten Dokumente die Ausführung der folgenden weiteren Vorgänge umfasst:
- Extrahierung der auf den Pfad des besagten digitalen Dokuments bezogenen Zeichenfolge, wobei der besagte Pfad eine Speicherstelle in dem besagten einen oder in den besagten mehreren Speichermedien identifiziert, in der das besagte digitale Dokument gespeichert ist, und Analyse der besagten Zeichenfolge derart, dass der Identifikationsname jedes einzelnen Ordners des besagten Pfads identifiziert wird;
- Wahl eines Startordnernamens aus den besagten identifizierten Ordnernamen, von dem aus der nächste Indexierungsvorgang vorgenommen werden kann;
- Indexierung der besagten Ordnernamen, beginnend mit dem besagten Startordnernamen und der hierarchischen Reihenfolge des besagten Pfads gemäß zu den entsprechenden Unterordnern fortfahrend, mit einem von 1 bis *n* zunehmenden ganzen Zahlenwert;
- Assoziation jedes der besagten Ordnernamen mit Wert *m* mit dem entsprechenden Ordnernamen mit Wert *m+1,* wobei *1<= m <= n-1* und wobei *m* schrittweise um eine Einheit erhöht wird;
- Speicherung der Ergebnisse der besagten Indexier- und Assoziationsvorgänge in einem zweiten Speicherplatz (200), der von allen besagten analysierten, digitalen Dokumente geteilt wird, derart, dass schrittweise für jeden der besagten Ordnernamen mit Wert *m* ein oder mehrere aus den durch den vorstehenden Vorgang mit dem besagten Ordnernamen mit Wert *m* assoziierten Ordnernamen mit Wert *m*+*1* gebildete Synonyme definiert werden, wobei *1<= m <= n-1;*
- Assoziation der besagten, in dem besagten zweiten Speicherplatz (200) gespeicherten Ordnernamen einschließlich der entsprechenden Synonyme und der Indexierwerte mit einer vorbestimmten Anzahl *x* der besagten, sortierten Sätze, beginnend mit dem ersten der besagten Sätze sowie geordnet und schrittweise fortfahrend, wobei die besagten assoziierten Ordnernamen den Ordnernamen entsprechen, die sich in dem besagten Pfad des besagten digitalen Dokuments befinden;
- Speicherung des Ergebnisses der besagten Assoziationsvorgänge in einem dritten Speicherplatz (300).

2. Verfahren (1) nach Patentanspruch 1, **dadurch gekennzeichnet, dass** unter der besagten Vielzahl von während des besagten Verkettungsvorgangs definierter Sätze jene Sätze, die am Anfang oder am Ende einen oder mehrere im Voraus als unzulässig definierte Begriffe aufweisen, ausgeschlossen werden.

3. Verfahren (1) nach einem jeden der vorstehenden Patentansprüche, **dadurch gekennzeichnet, dass** der besagte Vorgang der Sortierung der besagten Sätze für jeden der besagten Sätze die Berechnung eines Sortierindexes *i* umfasst, welcher der Anzahl der Hits des besagten Satzes in dem besagten digitalen Dokument entspricht, geteilt durch die Gesamtanzahl der Lexeme des besagten Dokuments und multipliziert mit der Anzahl der Lexeme, die den besagten Satz bilden, wobei die besagten Sätze in abnehmender Reihenfolge auf Grundlage des besagten Sortierindexes *i* sortiert werden.

4. Verfahren (1) nach einem jeden der vorstehenden Patentansprüche, **dadurch gekennzeichnet, dass** die besagte Mindestanzahl der Lexeme, die jeder Satz enthalten kann, zwei ist und dass die besagte Höchstanzahl der Lexeme, die jeder Satz enthalten kann, fünf ist.

5. Verfahren (1) nach einem jeden der vorstehenden Patentansprüche, **dadurch gekennzeichnet, dass** die besagte vorbestimmte Anzahl *n* gleich zwei ist.

6. Verfahren (1) nach einem jeden der vorstehenden Patentansprüche, **dadurch gekennzeichnet, dass** die besagte Anzahl der Sätze *x* auf Grundlage der Gesamtanzahl der in dem besagten digitalen Dokument enthaltenen Lexeme gewählt wird.

7. Verfahren (1) nach Patentanspruch 6, **dadurch gekennzeichnet, dass** die besagte Anzahl der Sätze *x* 15 Sätzen entspricht, wenn die besagte Gesamtanzahl der Lexeme höher ist als 1000, oder dass die besagte Anzahl der Sätze *x* 10 Sätzen entspricht, wenn die besagte Gesamtanzahl der Lexeme zwischen 1000 und 101 liegt, oder dass die besagte Anzahl der Sätze *x* 5 Sätzen entspricht, wenn die besagte Gesamtzahl der Lexeme gleich oder kleiner ist als 100.

8. Verfahren (1) nach einem jeden der vorstehenden Patentansprüche, **dadurch gekennzeichnet, dass** entsprechend des besagten Analysevorgangs des besagten Inhalts des besagten digitalen Dokuments, der geeignet ist, jedes einzelne Lexem zu identifizieren, die Leerstellen und die Satzzeichen als Trennelemente zwischen jedem der besagten Lexeme und den benachbarten Lexemen betrachtet werden.

9. Verfahren (1) nach einem jeden der vorstehenden Patentansprüche, **dadurch gekennzeichnet, dass** entsprechend des besagten Analysevorgangs der besagten, zu dem besagten Pfad gehörigen Zeichenfolge, der geeignet ist, den Identifikationsnamen jedes einzelnen Ordners zu identifizieren, die Symbole "/" oder "\" als Trennelemente zwischen jedem der besagten Ordnernamen und den benachbarten Ordnernamen betrachtet werden.

10. Verfahren nach einem jeden der vorstehenden Patentansprüche, **dadurch gekennzeichnet, dass** entsprechend des besagten Auswahlvorgangs des besagten Startordnernamens der besagte Startordnernamen ausgewählt wird beginnend mit dem Ordnernamen, der dem äußeren Blattordner des besagten Pfads entspricht, sowie unter hierarchischer Rückverfolgung des besagten Pfads um eine Anzahl von Ordnernamen, die der vorbestimmten Anzahl *n* entspricht.

11. Computerprogrammprodukt, einen Softwarecodeabschnitt umfassend, der im Speicher eines elektronischen Verarbeitungsgeräts gespeichert ist, um die Vorgänge des Verfahrens nach einem jeden der Patentansprüche von 1 bis 10 zu implementieren, wenn der besagte Softwarecodeabschnitt in dem besagten elektronischen Verarbeitungsgerät ausgeführt wird.

12. IT-Apparatur, wenigstens ein elektronisches Verarbeitungsgerät umfassend, das Folgendes aufweist:
- ein oder mehrere Speichermedien, in dem/in denen ein oder mehrere digitale Dokumente gespeichert sind, und in dem/in denen der Softwarecodeabschnitt des Computerprogrammprodukts nach Patentanspruch 11 geladen ist;
- einen Prozessor, der darauf konfiguriert ist, den besagten Softwarecodeabschnitt so auszuführen, dass die Vorgänge des Verfahrens nach einem jeden der Patentansprüche von 1 bis 10 implementiert werden.

## Revendications

1. Méthode mise en oeuvre par ordinateur (1) pour générer une ontologie informatique à travers l'analyse d'une pluralité de documents numériques ayant un contenu alphanumérique mémorisés dans un ou plusieurs supports de stockage, ladite méthode (1) comprenant l'exécution des opérations suivantes pour chacun desdits documents:
- extraction dudit contenu alphanumérique dudit document numérique et analyse dudit contenu de façon à identifier chacun de ses lexèmes;
- concaténation de chacun desdits lexèmes avec un ou plusieurs lexèmes adjacents de façon à définir une pluralité de phrases, le nombre minimum et maximum de lexèmes qui peut être contenu dans chaque phrase étant défini à l'avance;
- calcul du nombre de visites pour chacune desdites phrases dans ledit document numérique;
- triage desdites phrases par ordre décroissant en fonction desdites visites calculées et stockage desdites phrases triées dans une première allocation de mémoire (100);
**caractérisée en ce qu'**elle prévoit l'exécution des opérations supplémentaires suivantes pour chacun desdits documents:
- extraction de la chaîne relative au parcours dudit document numérique, ledit parcours identifiant un emplacement sur un ou plusieurs supports de stockage où ledit document numérique est stocké, et analyse de ladite chaîne de façon à identifier le nom d'identification de chaque dossier dudit parcours;
- sélection parmi lesdits noms de dossier identifiés d'un nom de dossier initial d'où il est possible de procéder avec l'opération d'indexation suivante;
- indexation desdits noms de dossier, en partant dudit nom de dossier initial et en continuant vers les sous-dossiers correspondants selon l'ordre hiérarchique dudit parcours, avec une valeur numérique entière croissant de 1 à *n*;
- association de chacun desdits noms de dossier de valeur *m* au nom de dossier correspondant de valeur *m*+*1,* où *1<= m* <= *n-1* et où *m* est augmenté progressivement d'une unité;
- mémorisation des résultats desdites opérations d'indexation et d'association dans une deuxième allocation de mémoire (200) partagée par tous lesdits documents numériques analysés, de façon à définir progressivement, pour chacun desdits noms de dossier de valeur *m,* un ou plusieurs synonymes constitués par les noms de dossier de valeur *m*+*1* associés, au moyen de l'opération précédente, audit nom de dossier de valeur *m,* où *1<= m <= n-1*;
- association desdits noms de dossier stockés dans ladite deuxième allocation de mémoire (200), comprenant les synonymes correspondants et les valeurs d'indexation, à un numéro x prédéfini desdites phrases triées, en partant de la première desdites phrases et en continuant d'une manière ordonnée et progressive, où lesdits noms de dossier associés correspondent aux noms de dossier présents dans ledit parcours dudit document numérique;
- mémorisation du résultat desdites opérations d'association dans une troisième allocation de mémoire (300).

2. Méthode (1) selon la revendication 1, **caractérisée en ce que,** parmi ladite pluralité de phrases définies durant ladite opération de concaténation, les phrases qui présentent, au début ou à la fin, un ou plusieurs mots définis à priori comme inadmissibles sont exclues.

3. Méthode (1) selon l'une quelconque des revendications précédentes, **caractérisée en ce que** ladite opération de triage desdites phrases prévoit de calculer, pour chacune desdites phrases, un index de triage *i* correspondant au nombre de visites de ladite phrase dans ledit document numérique, divisé par le nombre total de lexèmes dudit document et multiplié par le nombre de lexèmes qui composent ladite phrase, lesdites phrases étant triées par ordre décroissant selon ledit index de triage *i*.

4. Méthode (1) selon l'une quelconque des revendications précédentes, **caractérisée en ce que** ledit nombre minimum de lexèmes que chaque phrase peut contenir est de deux lexèmes et ledit nombre maximum de lexèmes que chaque phrase peut contenir est de cinq lexèmes.

5. Méthode (1) selon l'une quelconque des revendications précédentes, **caractérisée en ce que** ledit nombre prédéfini *n* est égal à deux.

6. Méthode (1) selon l'une quelconque des revendications précédentes, **caractérisée en ce que** ledit nombre de phrases *x* est sélectionné en fonction du nombre total de lexèmes contenus dans ledit document numérique.

7. Méthode (1) selon la revendication 6, **caractérisée en ce que** ledit nombre de phrases *x* correspond à 15 phrases quand ledit nombre total de lexèmes est supérieur à 1000 lexèmes, ou ledit nombre de phrases *x* correspond à 10 phrases quand ledit nombre total de lexèmes est compris entre 1000 et 101 lexèmes, ou ledit nombre de phrases *x* correspond à 5 phrases quand ledit nombre total de lexèmes est égal ou inférieur à 100 lexèmes.

8. Méthode (1) selon l'une quelconque des revendications précédentes, **caractérisée en ce que** ladite opération d'analyse dudit contenu dudit document numérique, apte à identifier chaque lexème spécifique, prévoit de considérer comme éléments de séparation parmi chacun desdits lexèmes et les lexèmes adjacents les espaces vides et les signes de ponctuation.

9. Méthode (1) selon l'une quelconque des revendications précédentes, **caractérisée en ce que** ladite opération d'analyse de ladite chaîne relative audit parcours, apte à identifier le nom d'identification de chaque dossier, prévoit de considérer comme éléments de séparation parmi chacun desdits noms de dossier et les noms de dossier adjacents les symboles "/" ou "\".

10. Méthode selon l'une quelconque des revendications précédentes, **caractérisée en ce que** selon ladite opération de sélection dudit nom de dossier initial, ledit nom de dossier initial est sélectionné en partant du nom de dossier correspondant au dossier à feuilles extérieur dudit parcours et en remontant de manière hiérarchique le long dudit parcours d'un nombre de noms de dossiers égal audit nombre prédéfini *n.*

11. Produit de programme informatique comprenant une portion de code de logiciel stockée à l'intérieur de la mémoire d'un dispositif électronique d'élaboration pour réaliser les opérations de la méthode selon l'une quelconque des revendications de 1 à 10 quand ladite portion de code de logiciel est exécutée dans ledit dispositif électronique d'élaboration.

12. Équipement informatique comprenant au moins un dispositif électronique d'élaboration doté de:
- un ou plusieurs supports de mémorisation où un ou plusieurs documents numériques sont stockés et où la portion de code de logiciel du produit de programme informatique, selon la revendication 11, est chargée;
- un processeur configuré de façon à exécuter ladite portion de code de logiciel de manière à réaliser les opérations de la méthode selon l'une quelconque des revendications de 1 à 10.
